# EUROPEAN PATENT APPLICATION

(11) **EP 4 542 232 A1**
(43) Date of publication of application: **23.04.2025**
(21) Application number: 24203083.1
(22) Date of filing: 27.09.2024
(51) Int. Cl.: G01N 35/04

(54) **SAMPLE PRETREATMENT SYSTEM CAPABLE OF AUTOMATICALLY OPENING CAP**

(30) Priority: 19.10.2023 CN 202311359298
(71) Applicant: Guilin Urit medical Electronics Co., LTD, Guangxi Zhuang Autonomous Region (CN)
(72) Inventor: Lin, Chang, Guilin (CN); Chen, YeQin, Guilin (CN); Jiang, Jun, Guilin (CN); Ma, YanZu, Guilin (CN)
(74) Representative: Sun, Yanan

(57) **Abstract**

The present disclosure relates to the technical field of medical instruments, and in particular to a sample pretreatment system capable of automatically opening a cap. The system includes a complete machine base plate, a sample introduction tray, a sample introduction side shifting assembly, a test tube rack identity (ID) recognition assembly, a transverse sample introduction assembly, a test tube ID recognition assembly, a test tube cap opening clamping assembly, a cap opening assembly, a test tube cap collecting assembly, a test tube rack conveying assembly, a floor cabinet assembly, an upper housing and a control assembly. After a test tube reaches the test tube cap opening clamping assembly, the test tube on a test tube rack is clamped, then the test tube cap opening clamping assembly rises by a certain distance to make a test tube cap rise to the position of the cap opening assembly, and then the test tube cap is rotated by the cap opening assembly to be separated from a test tube opening. The system can automatically perform operations including recognition, cap opening, cap collection, etc. on a sample, and the cap opening operation has very high safety stability, which reduces labor intensity of operators, reduces the biological pollution risk, improves the sample treatment efficiency, and solves the problem that an existing cap opening machine used online with an inspection apparatus is unreliable in cap opening.

## Description

### TECHNICAL FIELD

The present disclosure relates to the technical field of medical instruments, and in particular to a sample pretreatment system capable of automatically opening a cap.

### BACKGROUND

At present, in vitro diagnostic (IVD) medical test analyzers for testing and analyzing body fluids such as urine or blood are used in various types of medical test institutions. When these analyzers collect samples to be tested, the analyzers basically move from top to bottom by means of sampling needles, and the sampling needles stretch into test tubes of tubular structures to absorb and collect the samples. After the samples are collected from patients, in order to ensure safety and stability of the samples during a transfer and transportation process, the test tubes will be sealed and stored by using test tube caps.

In the prior art, for the test tubes employed by some medical testing institutions, the test tube caps do not need to be removed, and the test tube caps are directly punctured by using the sampling needles, such that the sampling needles reach into the test tubes to realize sample collection. However, in many cases, this form will bring some problems. For example, the puncture process of the test tube caps, the test tube caps will produce some debris, these debris may block ports of the sampling needles, or mixed into the samples, adversely affecting test results. Due to this reason and other factors, for many test tubes used in the testing institutions, operators are required to manually remove the test tube caps before testing to ensure that test tube openings are open, such that the sampling needles can conveniently stretch into the test tubes. Thus, the operators spend a lot of time manually removing the caps, collecting waste caps, etc., and during this operation, the risk of harmful aerosol infection of these operators is also increased.

There are also many cap opening machines available to people that can automatically remove the caps of the test tubes. Some of these instruments can only be used alone and cannot be connected to the test analyzers. During the inspection process, an inspector also needs to rotate the test tube between the cap opening machine and an inspection apparatus. There are also some cap opening machines that can be used online with the inspection apparatus, but there are problems such as unreliable cap opening and frequent failures in a cap opening process.

### SUMMARY

An objective of the present disclosure is to provide a sample pretreatment system capable of automatically opening a cap, which realizes online use with an inspection apparatus and solves the problems of unreliable cap opening, etc.

To achieve the above objective, the present disclosure provides a sample pretreatment system capable of automatically opening a cap. The system includes a complete machine base plate, a sample introduction tray, a sample introduction side shifting assembly, a test tube rack identity (ID) recognition assembly, a transverse sample introduction assembly, a test tube ID recognition assembly, a test tube cap opening clamping assembly, a cap opening assembly, a test tube cap collecting assembly, a test tube rack conveying assembly, a floor cabinet assembly, an upper housing and a control assembly.

The complete machine base plate is fixedly arranged at a top of the floor cabinet assembly, and the sample introduction tray, the sample introduction side shifting assembly, the test tube rack ID recognition assembly, the transverse sample introduction assembly, the test tube ID recognition assembly, the test tube cap opening clamping assembly, the cap opening assembly, the test tube cap collecting assembly, the test tube rack conveying assembly, the upper housing and the control assembly are all fixedly arranged on the complete machine base plate. The upper housing is positioned at the side close to the sample introduction tray, and the sample introduction side shifting assembly is positioned at one side of the sample introduction tray. The test tube rack ID recognition assembly is positioned at one side of the sample introduction tray, and the transverse sample introduction assembly is positioned at one side of the test tube rack ID recognition assembly. The test tube ID recognition assembly is positioned at the side, far away from the test tube rack ID recognition assembly, of the transverse sample introduction assembly, and the cap opening assembly is positioned at one side of the test tube ID recognition assembly. The test tube cap opening clamping assembly is positioned at the side, far away from the test tube ID recognition assembly, of the cap opening assembly, and the test tube cap collecting assembly is positioned at one side of the cap opening assembly. The test tube rack conveying assembly is positioned at one side of the test tube cap opening clamping assembly, and the control assembly is positioned at one side of the sample introduction tray.

The sample introduction tray is of a near-sighted flat sheet metal structure.

The sample introduction tray stores a plurality of test tube rack combinations, and the test tube rack combination includes a test tube rack, a plurality of test tubes, a test tube rack ID, test tube IDs and test tube caps.

The transverse sample introduction assembly includes a bottom plate, a first motor, a first driving wheel, a first driven wheel, a first belt, a first guide rail, a first sliding block, a shifting sheet, a belt fixing plate and a test tube rack supporting plate. The first motor is arranged at one side of the bottom plate, the first driving wheel is fixedly connected to an output end of the first motor and is positioned at one side of the first motor, and the first driven wheel is rotationally connected to the bottom plate and positioned at the side far away from the first motor. The first belt is arranged between the first driving wheel and the first driven wheel in a sleeving manner, the first guide rail is fixedly connected to the bottom plate and positioned at a top of the bottom plate, and the first sliding block is slidably connected to the first guide rail and positioned at one side of the first guide rail. The shifting sheet is fixedly connected to the first sliding block and positioned at a top of the first sliding block, the belt fixing plate is fixedly connected to the first sliding block and arranged at one side of the first belt, and the test tube rack supporting plate is arranged at one side of the first guide rail.

The cap opening assembly includes a cap opening bottom plate, a second guide rail, a second sliding block, an electric claw mounting plate, a second driven wheel, a second motor, a second driving wheel, a second belt, a rotating electric claw, a clamping finger and a finger cushion block. The second guide rail is arranged at one side of the cap opening bottom plate, and the second sliding block is slidably connected to the second guide rail and is positioned at one side of the second guide rail. The electric claw mounting plate is fixedly connected to the second sliding block and positioned at one side of the second sliding block, and the second driven wheel is arranged at one side of the cap opening bottom plate. The second motor is fixedly connected to the cap opening bottom plate and positioned at one side of the cap opening bottom plate, and the second driving wheel is fixedly connected to an output end of the second motor and positioned at one side of the second motor. The second belt is arranged at one side of the second driving wheel and one side of the second driven wheel in a sleeving manner, and the rotating electric claw is arranged at one side of the second belt. The clamping finger is arranged at a bottom of the rotating electric claw, and the finger cushion block is fixedly connected to the clamping finger and positioned at one side of the clamping finger.

According to the sample pretreatment system capable of automatically opening a cap of the present disclosure, the control assembly includes a circuit board for controlling the logic action of the whole instrument, an electronic component for supplying power to the instrument, etc. The sample introduction tray is used as a sample input area, after an operator places a test tube on a test tube rack, the test tube rack is placed on the sample introduction tray, and the test tube rack and the test tube form a test tube rack combination H to be conveyed on the instrument. The sample introduction side shifting assembly includes a left push sheet and a right push sheet which can rotate around a fixed shaft, and the test tube rack moves from back to front under the push of the push sheets until the test tube rack is pushed to the transverse sample introduction assembly. In this case, the test tube rack ID recognition assembly on the right side of the transverse sample introduction assembly reads ID information of the test tube rack and transmits the information to the control assembly. When a test instrument can receive a sample, the transverse sample introduction assembly pushes the test tube rack to the test tube ID recognition assembly from right to left. The test tube rack ID recognition assembly firstly detects whether a test tube exists at a corresponding position by means of a sensor. When the test tube is detected to exist, the test tube is clamped and rotated, a bar code attached to an outer wall of the test tube is recognized and read by a code scanner, and information is sent to the control assembly. After the scanning operation is completed, the transverse sample introduction assembly continues to push the test tube rack leftwards, and when the test tube reaches the test tube cap opening clamping assembly, the test tube cap opening clamping assembly clamps the test tube on the test tube rack, and then rises by a certain distance to allow a test tube cap to rise to the position of the cap opening assembly. The cap opening assembly clamps the test tube cap and then rotate (or not rotate) the test tube cap to separate the test tube cap from a test tube opening. Then the cap opening assembly is moved backwards, and the test tube cap is dropped into the test tube cap collecting assembly. After ID recognition, reading and cap opening operations of all the test tubes on the test tube rack are completed, the test tube rack conveying assembly starts to convey the test tube rack leftwards. In this way, the entire treatment process of one test tube rack is completed by the pretreatment system. The control assembly is the "brain" of the pretreatment system, which mainly realizes power supply, logic control, etc. inside the system, realizes automatic recognition, cap opening, cap collection, and other operations of the samples collected from patients, and the cap opening operation has very high safety stability. This not only ensures reliable operation of the instrument, but also allows the samples to be safely circulated without being damaged and contaminated. In this way, the labor intensity of the operators is reduced, the biological pollution risk is reduced, and the sample treatment efficiency is improved. The online use with the existing inspection apparatus is realized, and the problems of unreliable cap opening, etc. are solved.

### BRIEF DESCRIPTION OF THE DRAWINGS

In order to more clearly describe the technical solutions in the examples of the present disclosure or in the prior art, a brief introduction to the accompanying drawings required for the description of the examples or the prior art will be provided below. Obviously, the accompanying drawings in the following description are merely some example of the present disclosure. Those of ordinary skill in the art can also derive other accompanying drawings from these accompanying drawings without making inventive efforts.
FIG. 1 is a schematic structural diagram of a sample pretreatment system capable of automatically opening a cap provided by the present disclosure.
FIG. 2 is a schematic diagram of a test tube rack combination provided by the present disclosure.
FIG. 3 is a schematic layout diagram from a top view of an internal structure of a sample pretreatment system capable of automatically opening a cap provided by the present disclosure.
FIG. 4 is a schematic diagram of a transverse sample introduction assembly of the present disclosure.
FIG. 5 is a schematic diagram when a test tube rack combination is conveyed to a test tube cap opening clamping assembly.
FIG. 6 is a front view of a test tube cap opening clamping assembly.
FIG. 7 is a view from a right front direction of a test tube cap opening clamping assembly.
FIG. 8 is a side view of a cap opening assembly.
FIG. 9 is a schematic diagram of a cap opening assembly.
FIG. 10 is a schematic diagram of mounting a cap opening detection sensor.
FIG. 11 is a schematic diagram in another direction of mounting a cap opening detection sensor.
FIG. 12 is a schematic diagram of a test tube cap collecting assembly.
FIG. 13 is a schematic diagram when a first test tube reaches a cap opening position.
FIG. 14 is a schematic diagram after a test tube cap opening clamping assembly rises by a certain distance.
FIG. 15 is a schematic diagram of successful cap opening.
FIG. 16 is a schematic diagram when a test tube cap H5 slips off during cap opening.
FIG. 17 is a schematic diagram when a test tube H2 slips off during cap opening.
FIG. 18 is a schematic diagram when a test tube cap is successfully separated but slide slightly during cap opening.

In the figures: 1-sample introduction tray, 2-sample introduction side shifting assembly, 3-test tube rack ID recognition assembly, 4-transverse sample introduction assembly, 5-test tube ID recognition assembly, 6-test tube cap opening clamping assembly, 7-cap opening assembly, 8-test tube cap collecting assembly, 9-test tube rack conveying assembly, 10-floor cabinet assembly, 11-upper housing, 12-control assembly, 13-complete machine base plate, 401-bottom plate, 402-first motor, 403-first driving wheel, 404-first driven wheel, 405-first belt, 406-first guide rail, 407-first sliding block, 408-shifting sheet, 409-belt fixing plate, 410-test tube rack supporting plate, 41 1-reset optocoupler, 701-cap opening bottom plate, 702-second guide rail, 703-second sliding block, 704-electric claw mounting plate, 705-second driven wheel, 706-second motor, 707-second driving wheel, 708-second belt, 709-rotating electric claw, 710-clamping finger, and 71 1-finger cushion block.

### DETAILED DESCRIPTION OF EMBODIMENTS

Examples of the present disclosure are described in detail below, instances of the examples are shown in the accompanying drawings, throughout which identical or similar reference numerals denote identical or similar elements or elements having identical or similar functions. The examples described below with reference to the accompanying drawings are exemplary and intended to explain the present disclosure, instead of being construed as limiting the present disclosure.

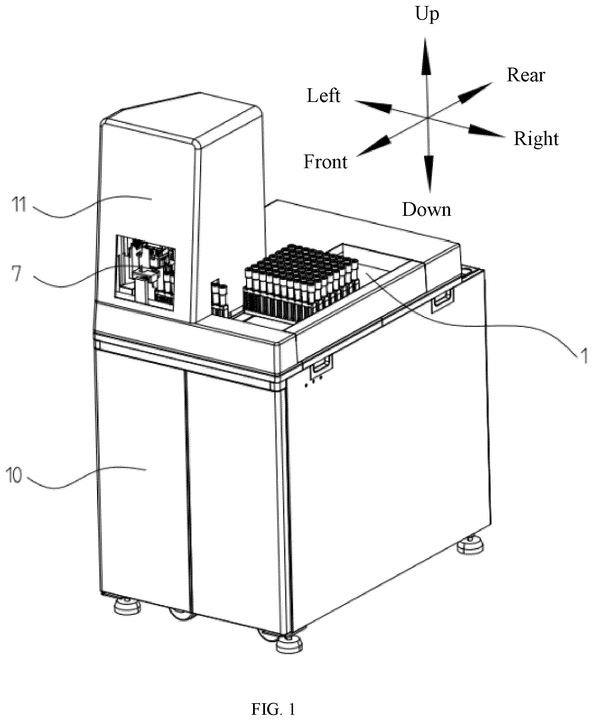

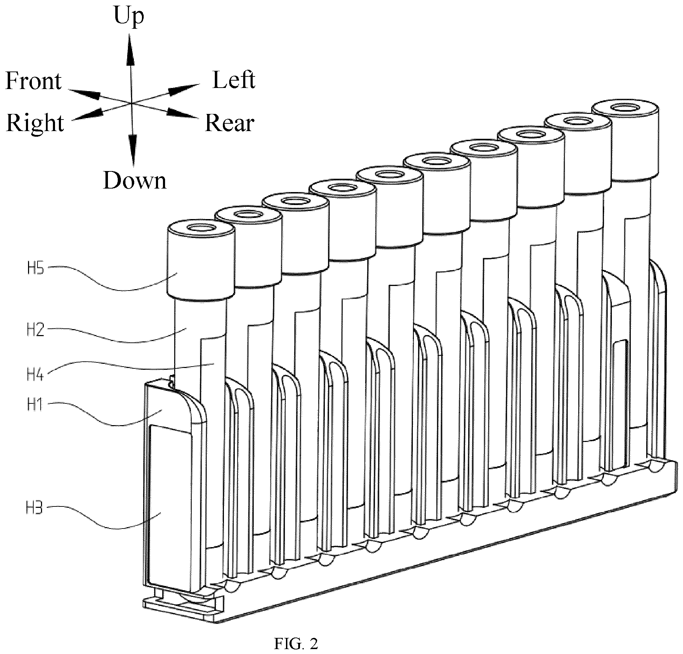

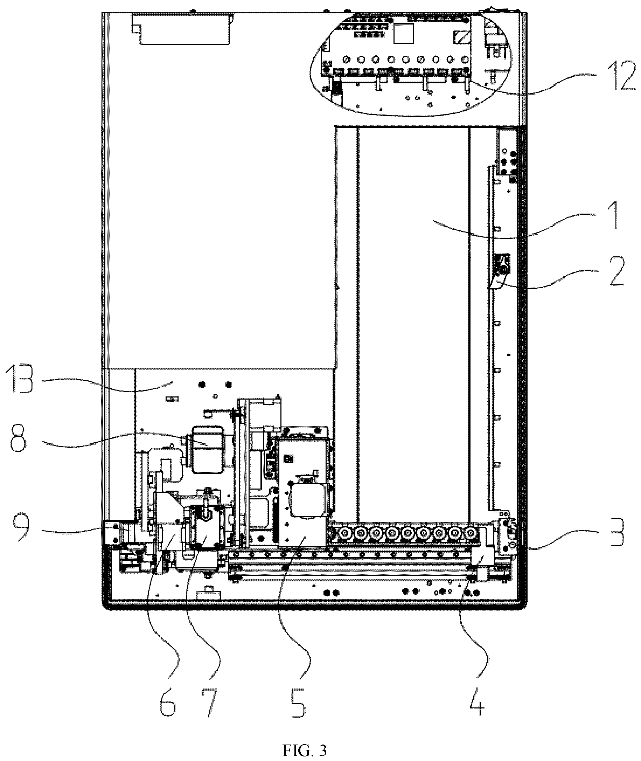

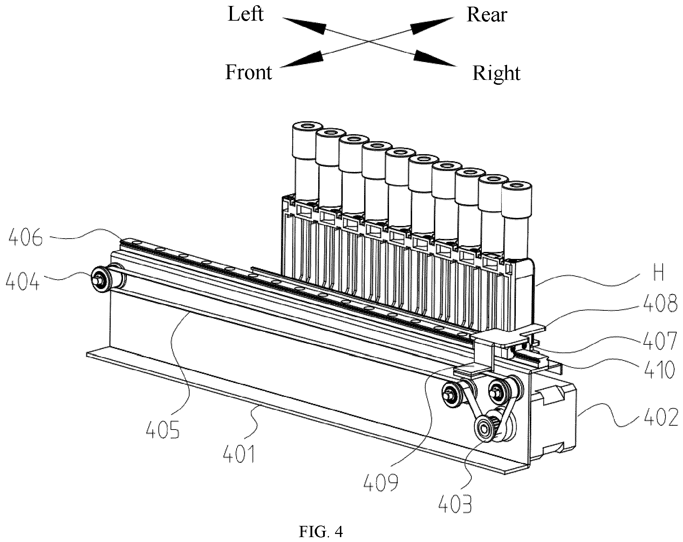

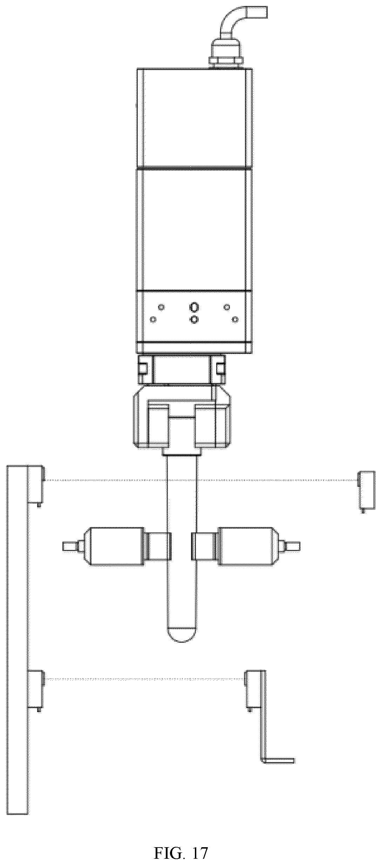

Referring to FIGs. 1-19, the present disclosure provides a sample pretreatment system capable of automatically opening a cap. The system includes a sample introduction tray 1, a sample introduction side shifting assembly 2, a test tube rack identity (ID) recognition assembly 3, a transverse sample introduction assembly 4, a test tube ID recognition assembly 5, a test tube cap opening clamping assembly 6, a cap opening assembly 7, a test tube cap collecting assembly 8, a test tube rack conveying assembly 9, a floor cabinet assembly 10, an upper housing 11, a control assembly 12 and a complete machine base plate 13.

The complete machine base plate 13 is fixedly arranged at a top of the floor cabinet assembly 10, and the sample introduction tray 1, the sample introduction side shifting assembly 2, the test tube rack ID recognition assembly 3, the transverse sample introduction assembly 4, the test tube ID recognition assembly 5, the test tube cap opening clamping assembly 6, the cap opening assembly 7, the test tube cap collecting assembly 8, the test tube rack conveying assembly 9, the upper housing 11 and the control assembly 12 are all fixedly arranged on the complete machine base plate 13. The upper housing 11 is positioned at the side close to the sample introduction tray 1, and the sample introduction side shifting assembly 2 is positioned at one side of the sample introduction tray 1. The test tube rack ID recognition assembly 3 is positioned at one side of the sample introduction tray 1, and the transverse sample introduction assembly 4 is positioned at one side of the test tube rack ID recognition assembly 3. The test tube ID recognition assembly 5 is positioned at the side, far away from the test tube rack ID recognition assembly 3, of the transverse sample introduction assembly 4, and the cap opening assembly 7 is positioned at one side of the test tube ID recognition assembly 5. The test tube cap opening clamping assembly 6 is positioned at the side, far away from the test tube ID recognition assembly 5, of the cap opening assembly 7, and the test tube cap collecting assembly 8 is positioned at one side of the cap opening assembly 7. The test tube rack conveying assembly 9 is positioned at one side of the test tube cap opening clamping assembly 6, and the control assembly 12 is positioned at one side of the sample introduction tray 1.

In this embodiment, the control assembly 12 includes a circuit board for controlling the logic action of the whole instrument, an electronic component for supplying power to the instrument, etc. The sample introduction tray 1 is used as a sample input area, after an operator places a test tube on a test tube rack, the test tube rack is placed on the sample introduction tray 1, and the test tube rack and the test tube form a test tube rack combination H to be conveyed on the instrument. The sample introduction side shifting assembly 2 includes a left push sheet and a right push sheet which can rotate around a fixed shaft, and the test tube rack moves from back to front under the push of the push sheets until the test tube rack is pushed to the transverse sample introduction assembly 4. In this case, the test tube rack ID recognition assembly 3 on the right side of the transverse sample introduction assembly 4 reads ID information of the test tube rack and transmits the information to the control assembly 12. When a test instrument can receive a sample, the transverse sample introduction assembly 4 pushes the test tube rack to the test tube ID recognition assembly 5 from right to left. The test tube rack ID recognition assembly 3 firstly detects whether a test tube exists at a corresponding position by means of a sensor. When the test tube is detected to exist, the test tube is clamped and rotated, a bar code attached to an outer wall of the test tube is recognized and read by a code scanner, and information is sent to the control assembly 12. After the scanning operation is completed, the transverse sample introduction assembly 4 continues to push the test tube rack leftwards, and when the test tube reaches the test tube cap opening clamping assembly 6, the test tube cap opening clamping assembly 6 clamps the test tube on the test tube rack, and then rises by a certain distance to allow a test tube cap to rise to the position of the cap opening assembly 7. The cap opening assembly 7 clamps the test tube cap and then rotate (or not rotate) the test tube cap to separate the test tube cap from a test tube opening. Then the cap opening assembly 7 is moved backwards, and the test tube cap is dropped into the test tube cap collecting assembly 8. After ID recognition, reading and cap opening operations of all the test tubes on the test tube rack are completed, the test tube rack conveying assembly 9 starts to convey the test tube rack leftwards. In this way, the entire treatment process of one test tube rack is completed by the pretreatment system. The control assembly 12 is the "brain" of the pretreatment system, which mainly realizes power supply, logic control, etc. inside the system, realizes automatic recognition, cap opening, cap collection, and other operations of the samples collected from patients, and the cap opening operation has very high safety stability. This not only ensures reliable operation of the instrument, but also allows the samples to be safely circulated without being damaged and contaminated. In this way, the labor intensity of the operators is reduced, the biological pollution risk is reduced, and the sample treatment efficiency is improved. The online use with the existing inspection apparatus is realized, and the problems of unreliable cap opening, etc. are solved. Furthermore, the sample introduction tray 1 stores a plurality of test tube rack combinations, and the test tube rack combination H includes a test tube rack H1, a plurality of test tubes H2, a test tube rack ID H3, test tube IDs H4 and test tube caps H5.

In this embodiment, a plurality of test tube rack combinations H are stored on the sample introduction tray 1. The test tube rack combination H is conveyed from rear to front on the sample introduction tray 1. When moving to the front position, the test tube rack combination H is conveyed from right to left, and the test tube rack combination H is composed of one test tube rack H1, a plurality of test tubes H2, etc. A right end face of each test tube rack is provided with the test tube rack ID H3. The test tube H2 is of an approximately cylindrical tubular structure with a closed bottom and an open top. The test tube H2 contains a certain amount of sample (blood, urine or other body fluids collected from humans or animals). The test tube ID H4 (i.e. sample ID) is affixed to the cylindrical surface of the test tube H2. Each test tube H2 is further provided with the test tube cap H5 at the top thereof, and the sample introduction tray 1 is of a near-sighted flat sheet metal structure for bearing the test tube rack combination H introduced from outside. The sample introduction tray 1 is provided with a sensor (not shown in the figure) for detecting whether there is a test tube rack combination H on the tray.

The sample introduction side shifting assembly 2 is used for pushing out the test tube rack combination H on the sample introduction tray 1 from back to front until the test tube rack combination H is pushed onto the transverse sample introduction assembly 4.

Furthermore, the transverse sample introduction assembly 4 includes a bottom plate 401, a first motor 402, a first driving wheel 403, a first driven wheel 404, a first belt 405, a first guide rail 406, a first sliding block 407, a shifting sheet 408, a belt fixing plate 409 and a test tube rack supporting plate 410. The first motor 402 is arranged at one side of the bottom plate 401, the first driving wheel 403 is fixedly connected to an output end of the first motor 402 and is positioned at one side of the first motor 402, and the first driven wheel 404 is rotationally connected to the bottom plate 401 and positioned at the side far away from the first motor. The first belt 405 is arranged between the first driving wheel 403 and the first driven wheel 404 in a sleeving manner, the first guide rail 406 is fixedly connected to the bottom plate 401 and positioned at a top of the bottom plate 401, and the first sliding block 407 is slidably connected to the first guide rail 406 and positioned at one side of the first guide rail 406. The shifting sheet 408 is fixedly connected to the first sliding block 407 and positioned at a top of the first sliding block 407, the belt fixing plate 409 is fixedly connected to the first sliding block 407 and arranged at one side of the first belt 405, and the test tube rack supporting plate 410 is arranged at one side of the first guide rail 406.

In this embodiment, the transverse sample introduction assembly 4 conveys the test tube rack combination H pushed by the sample introduction side shifting assembly 2 from right to left. An upper surface of the test tube rack supporting plate 410 is at the same height as an upper surface of the sample introduction tray 1. The test tube rack is pushed from the sample introduction tray 1 to the test tube rack supporting plate 410 by the sample introduction side shifting assembly 2. After the sample is pushed in place, the sample introduction side shifting assembly 2 moves backwards to an initial position. At the same time, the test tube rack ID recognition assembly 3 on the right side of the transverse sample introduction assembly 4 reads the test tube rack ID H3 and transmits information to the control assembly 12. The test tube rack combination H having completed recognition and reading of the test tube rack ID H3 is pushed from right to left by the shifting sheet 408 and first reaches the test tube ID recognition assembly 5.

When the first test tube H2 reaches the position of the test tube ID recognition assembly 5, the transverse sample introduction assembly 4 enters a stepping stage, and each time code scanning of a test tube is completed, the transverse sample introduction assembly 4 steps leftwards once, such that the second test tube H2 reaches the position of the test tube ID recognition assembly 5... When the first test tube reaches the cap opening position, the instrument will perform cap opening operation on the first test tube H2, and at the same time, code scanning and recognition are performed on the fourth test tube H2 by the test tube ID recognition assembly 5. Since the time for the cap opening operation of the instrument is longer than the time for scanning the ID of the test tube, after the first test tube reaches the cap opening position, the transverse sample introduction assembly 4 steps leftwards once every time the cap opening operation is completed... until all the test tubes H2 on the test tube rack H1 complete the code scanning and cap opening operations, and then, the transverse sample introduction assembly 4 retracts rightwards to the initial position.

The test tube ID recognition assembly 5 detects whether or not the test tube H2 exists on the corresponding position of the test tube rack H1. When the test tube is detected to exist, the test tube is clamped and rotated by the test tube cap opening clamping assembly 6, a test tube bar code H4 attached to an outer wall of the test tube is recognized and read by a code scanner, and information is sent to the control assembly 12. After code scanning of the first test tube H2 is completed, the transverse sample introduction assembly 4 will step leftwards once, such that the test tube ID recognition assembly 5 performs code scanning operation on the second test tube H2, and thus sequentially performs code scanning operation on all the test tubes H2 on the test tube rack H1.

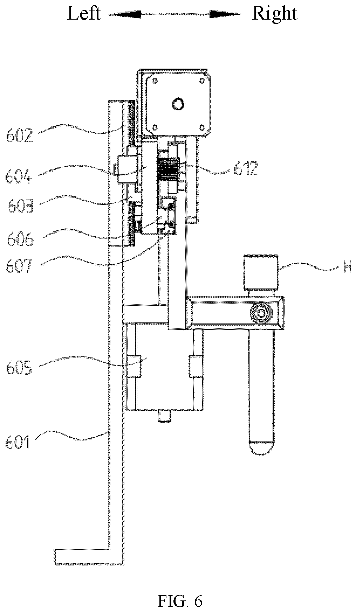

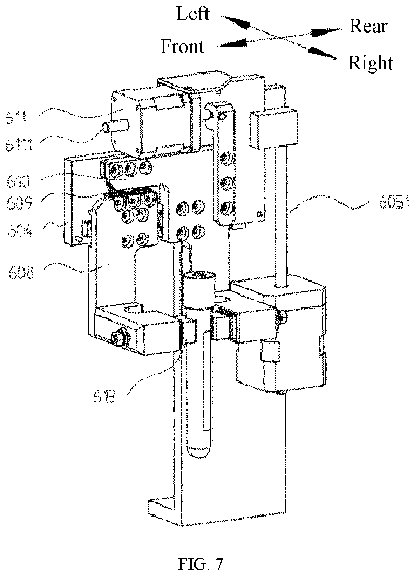

The test tube H2 on the test tube rack H1 is also pushed to the position of the test tube cap opening clamping assembly 6 during the process of completing code scanning and continuously moving to the left. FIGs. 6 and 7 are schematic structural diagrams of the test tube cap opening clamping assembly 6, a clamping bottom plate 601 is fixedly arranged on the complete machine base plate 13 of the pretreatment system, and a third guide rail 602 extending vertically is fixedly arranged on an upper portion of the clamping bottom plate 601. The third guide rail 602 is provided with a third sliding block 603 capable of vertically sliding along the third guide rail. The third sliding block 603 is fixedly provided with a lifting bottom plate 604. A second motor 605 is also fixedly arranged on the clamping bottom plate 601. The second motor 605 is provided with a first lead screw 6051 capable of vertically moving. An upper end of the first lead screw 6051 is fixedly connected to the lifting bottom plate 604, such that the lifting bottom plate 604 is driven to move up and down by the second motor 605. A fourth guide rail 606 extending back and forth is arranged on the lifting bottom plate 604. The fourth guide rail 606 is provided with two fourth sliding blocks 607 capable of extending back and forth along the fourth guide rail 606. A first clamping seat 608 is fixedly arranged on one of the fourth sliding blocks 607. A first rack 609 is fixedly arranged on the first clamping seat 608. A second clamping seat 610 is arranged on the other fourth sliding block 607. A first rack 609 is also fixedly arranged on the second clamping seat 610. A third motor 611 is also fixedly arranged on the lifting bottom plate 604. The third motor 611 is provided with a second lead screw 6111 capable of moving back and forth. A front end of the second lead screw 6111 is fixedly arranged on the second clamping seat 610. A second gear 612 is also arranged on the lifting bottom plate 604 and can rotate around the central axis of the second gear. The racks on the first clamping seat 608 and the second clamping seat 610 are both meshed with the second gear 612. In this way, when the third motor 611 pushes the second clamping seat 610 to move, the first clamping seat 608 will simultaneously move towards or away from the first clamping seat 608. A clamping block 613 is elastically arranged on each of the first clamping seat 608 and the second clamping seat 610. A front end of the clamping block 613 is provided with an arc-shaped groove, and the arc-shaped groove directly abuts against the test tube H2. The clamping block 613 is elastically arranged on the first clamping seat 608 or the second clamping seat 610, and can sufficiently ensure reliable clamping of the test tube without loosening. Certainly, the test tube cap opening clamping assembly 6 should also include a sensor for detecting an operating position of the motor.

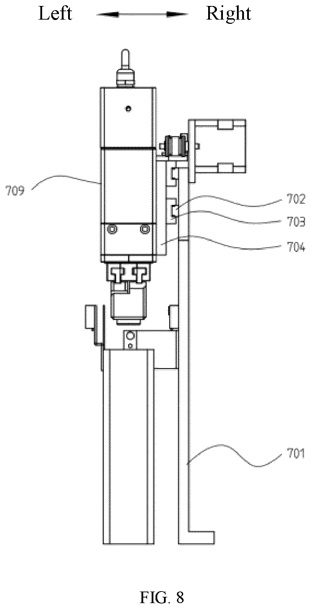

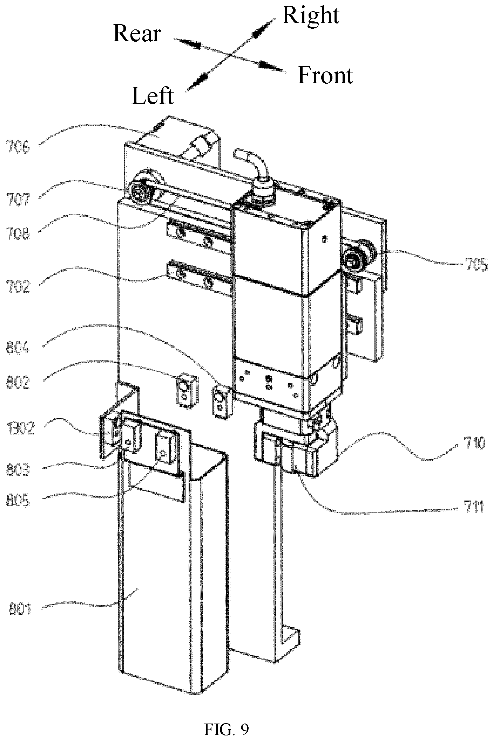

Furthermore, as shown in FIGs. 8 and 9, the cap opening assembly 7 includes a cap opening bottom plate 701, a second guide rail 702, a second sliding block 703, an electric claw mounting plate 704, a second driven wheel 705, a second motor 706, a second driving wheel 707, a second belt 708, a rotating electric claw 709, a clamping finger 710 and a finger cushion block 711. The second guide rail 702 is arranged at one side of the cap opening bottom plate 701, and second sliding block 703 is slidably connected to the second guide rail 702 and is positioned at one side of the second guide rail 702. The electric claw mounting plate 704 is fixedly connected to the second sliding block 703 and positioned at one side of the second sliding block 703, and the second driven wheel 705 is arranged at one side of the cap opening bottom plate 701. The second motor 706 is fixedly connected to the cap opening bottom plate 701 and positioned at one side of the cap opening bottom plate 701, and the second driving wheel 707 fixedly connected to an output end of the second motor 706 and positioned at one side of the second motor 706. The second belt 708 is arranged at one side of the second driving wheel 707 and one side of the second driven wheel 705 in a sleeving manner, and the rotating electric claw 709 is arranged at one side of the second belt 708. The clamping finger 710 is arranged at a bottom of the rotating electric claw 709, and the finger cushion block 711 is fixedly connected to the clamping finger 710 and positioned at one side of the clamping finger 710.

In this embodiment, the cap opening bottom plate 701 is fixedly arranged on the complete machine base plate 13 of the pretreatment system. The second guide rail 702 extending back and forth is arranged on the cap opening bottom plate 701. The second guide rail 702 is provided with the second sliding block 703 capable of sliding back and forth along the second guide rail. The second sliding block 703 is fixedly provided with the electric claw mounting plate 704. The cap opening bottom plate 701 is further provided with the second driven wheel 705. An outer ring of the second driven wheel 705 can rotate around the axis of the second driven wheel. The second motor 706 is also fixedly arranged on the cap opening bottom plate 701. The second driving wheel 707 is fixed to an output shaft of the second motor 706. The second driving wheel 707 and the second driven wheel 705 are in series transmission by means of the second belt 708. The electric claw mounting plate 704 is fixedly connected to a certain position on the circumference of the second belt 708. In this way, when the second motor 706 rotates, the second belt 708 runs along with the second motor, thereby driving the electric claw mounting plate 704 to move back and forth. The electric claw mounting plate 704 is fixedly provided with the electric rotating electric claw 709. Two clamping fingers 710 are mounted on a lower portion of the rotating electric claw 709. The finger cushion block 711 is further fixedly arranged on the clamping finger 710. The two clamping fingers 710 can be clamped towards each other or released from each other, so as to clamp the test tube cap H5. The two clamping fingers 710 can also rotate around the symmetrical center of the two clamping fingers, such that the cap opening process of the test tube cap H5 without a thread structure can be smoother, or the test tube cap H5 with a thread structure can be opened directly. It should be pointed out that the rotating electric claw 709 selected here has a clamping sensing function, that is, when the clamping finger 710 clamps the test tube cap H5, the rotating electric claw 709 will know that the test tube cap H5 has been clamped and maintains this state without continuing to clamp or loosen the test tube cap. At the same time, the rotating electric claw 709 feeds back information that the test tube cap H5 is clamped to the control assembly in time. In this way, when a size of the test tube cap H5 changes, the rotating electric claw 709 can reliably clamp the test tube cap H5, which significantly improves the stability of operation of the instrument. Certainly, the cap opening assembly 7 should also include a sensor for detecting an operating position of the motor.

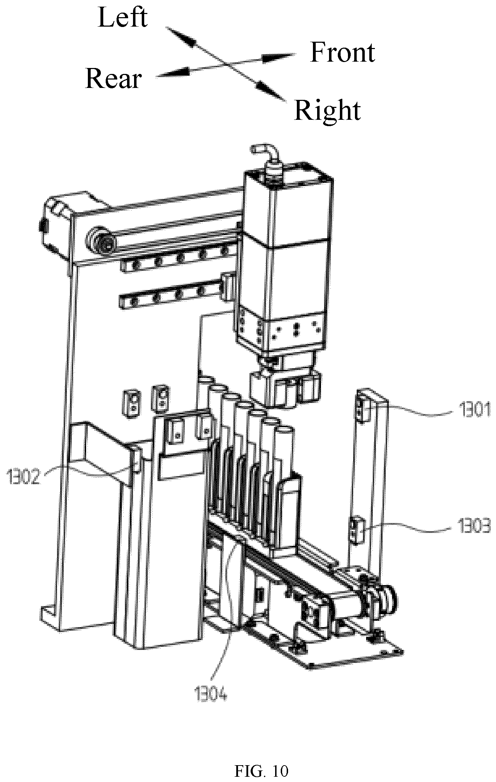

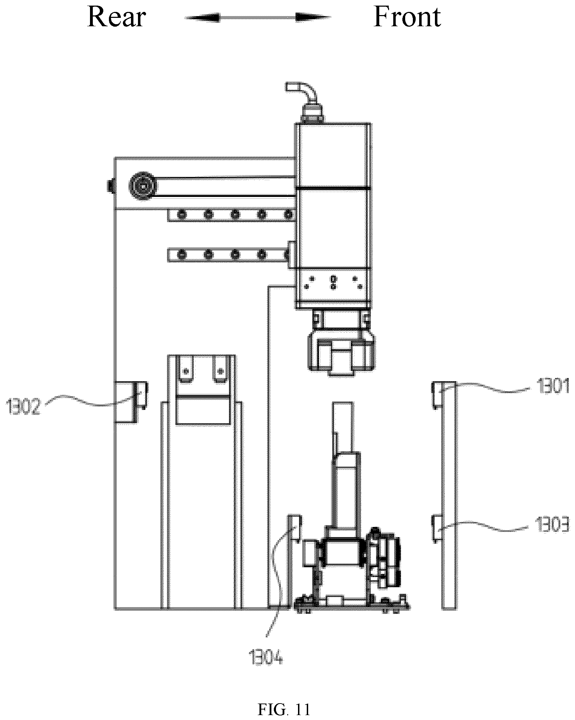

As shown in FIGs. 10 and 11, at the cap opening position, two groups of through-beam sensors are also arranged in the front and rear direction of the test tube H2 to monitor the cap opening process, such that the instrument can grasp the cap opening condition at any time during cap opening, and the stability and safety of the cap opening operation are improved. A transmitting sensor 1301 and a receiving sensor 1302 are arranged at the positions, near the test tube cap H5, of the top of the test tube H2, and are arranged at the front and rear sides of the test tube H2 respectively in the front and rear direction, forming a pair to work. When there is an object (test tube H2 or test tube cap H5) between the two sensors, the sensors can sense the object in time and feed back this information to the control assembly 12. A transmitting sensor 1303 and a receiving sensor 1304 are arranged near the bottom of the test tube H2, and are arranged at the front and rear sides of the test tube H2 respectively in the front and rear direction, forming a pair to work. When there is an object (test tube H2 or test tube cap H5) between the two sensors, the sensors can sense the object in time and feed back this information to the control assembly 12. How the sensor works will be explained in the description of the cap opening process below.

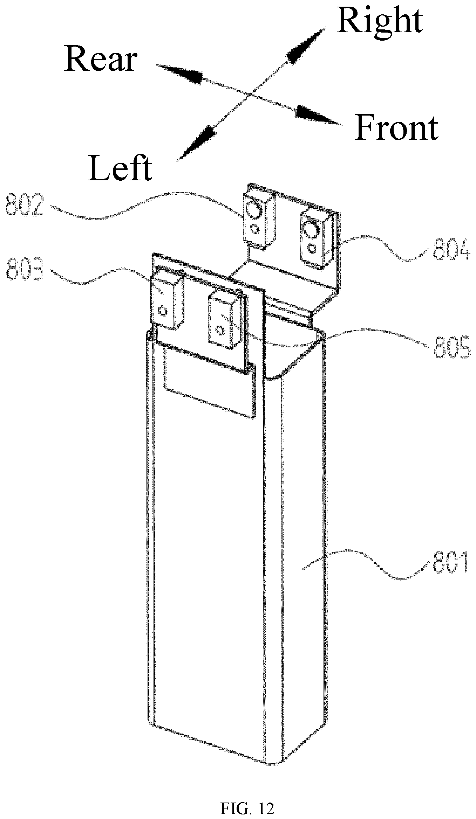

As shown in FIG. 12, the test tube cap collecting assembly 8 includes a cap dropping passage 801. Two groups of through-beam sensors are arranged near an upper opening of the cap dropping passage 801 in the left and right direction. A transmitting sensor 802 and a receiving sensor 803 form a pair to work. When there is an object (such as the test tube cap H5) between the two sensors, the sensors can sense the object in time and feed back this information to the control assembly 12. A transmitting sensor 804 and a receiving sensor 805 form a pair to work. When there is an object (such as the test tube cap H5) between the two sensors, the sensors can sense the object in time and feed back this information to the control assembly 12. Certainly, a cap collecting bucket 806 and a cap collecting bag 807, which are commonly used and special for collecting medical waste, are further arranged at the positions, below the cap dropping passage 801, of an interior of the floor cabinet assembly 10 to collect the test tube cap H5 falling from the cap dropping passage 801. The cap collecting bucket 806 and the cap collecting bag 807 are not described in detail here. A disinfection device 808 (not shown) may be arranged near the collecting bag 807 to filter and disinfect a surrounding environment of the collecting bag 807, effectively preventing operators from being infected due to contact with aerosol emitted from the removed test tube cap.

The cap opening process of each assembly is described below.

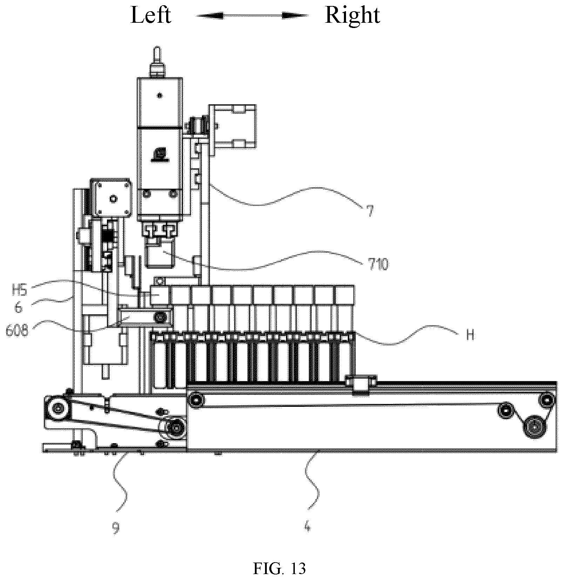

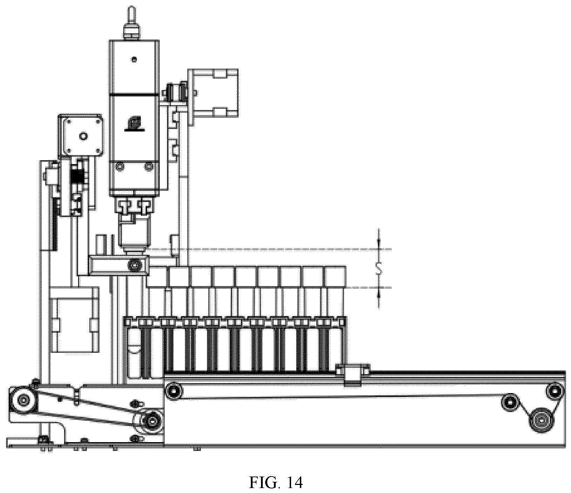

After the initialization of the instrument is completed, the test tube cap opening clamping assembly 6 and the cap opening assembly 7 are both in an initial state, and the positions of the test tube cap opening clamping assembly and the cap opening assembly relative to the test tube rack on the transverse sample introduction assembly 4 are shown in FIGs. 13 and 14. In this case, the clamping block 613 of the test tube cap opening clamping assembly 6 is in an open state. The first lead screw 6051 is in a low position state. The rotating electric claw 709 of the cap opening assembly 7 is in a forward extending state. The clamping finger 710 is also in an open state.

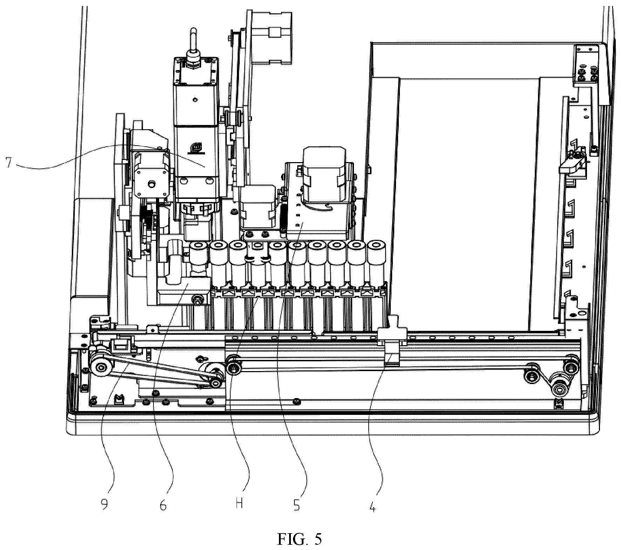

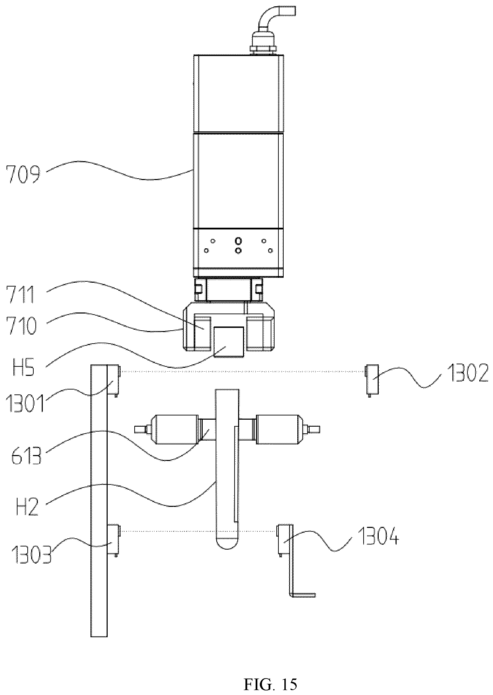

When the test tube rack combination H moves to the position shown in FIG. 5, the first test tube position on the test tube rack H1 reaches the cap opening position, the third motor 611 is started, and the two clamping blocks 613 move towards each other to clamp the test tube H2. After clamping, the second motor 605 starts to operate to drive the lifting bottom plate 604 to rise upwards by a distance S, thereby lifting the test tube H2 from the test tube rack H1 by a distance S, as shown in FIG. 14. In this case, the operating position of the test tube cap opening clamping assembly 6 is denoted as L1. This position ensures that the test tube cap H5 enters exactly midway between the two clamping fingers 710 in the cap opening assembly 7. Subsequently, the rotating electric claw 709 of the cap opening assembly 7 clamps the test tube cap H5. After clamping, the rotating electric claw 709 starts to rotate counterclockwise. Meanwhile, the second motor 605 starts to operate reversely to drive the clamped test tube H2 to descend by the distance S at the same time, thereby separating the test tube H2 from the test tube cap H5. In this case, there will be no object between the transmitting sensor 1301 and the receiving sensor 1302, and the sensors determine that the cap operation is successfully completed, as shown in FIG. 15. In this case, the transmitting sensor 1303 and the receiving sensor 1304 detect the bottom of the test tube H2, indicating that the test tube H2 has been successfully placed back on the corresponding position of the test tube rack H1. Then, the third motor 611 is started to operate reversely, thereby releasing the test tube H2. After the sensors determine that the cap opening operation has been successfully completed, in the process in which the third motor 611 operates to make the test tube H2 be released, rotation of the rotating electric claw 709 is stopped, and the two clamping fingers 710 are ensured to be positioned in the front and rear direction. Then, the second motor 706 is started to drive the rotating electric claw 709 to move backwards until the clamped test tube cap H5 moves to the position right above the cap dropping passage 801 (i.e. the cap dropping position). Then, the rotating electric claw 709 is opened, and the test tube cap H5 is dropped into the cap dropping passage 801. Then, the transmitting sensor 802 and the receiving sensor 803, and the transmitting sensor 804 and the receiving sensor 805 simultaneously perform detection and determine whether the test tube cap H5 on the rotating electric claw 709 has been successfully dropped. If the test tube cap falls down successfully, the second motor 706 starts to operate reversely to drive the rotating electric claw 709 to move forwards until the electric claw returns to the position in which the test tube cap H5 is clamped (i.e. the initial state of the cap opening assembly 7), waiting for the next test tube cap opening operation. If falling fails, the rotating electric claw 709 performs clamping again and then performs loosening, and then it is detected whether the test tube cap H5 falls successfully again. If the test tube cap still fails to fall, the test tube cap is clamped again and loosened again, and then detection is performed again... until the test tube cap H5 falls successfully. Certainly, the number of times of repeating cap dropping is set for the instrument. If the test tube cap H5 still fails to fall after reaching the set number of times, the instrument will give an alarm prompt, such that the operator can check and manually eliminate a fault.

Each time the cap of the test tube H2 corresponding to the test tube position on the test tube rack H1 is opened, the transverse sample introduction assembly 4 moves further to the left to push the test tube H2 at the next test tube position to the cap opening position. After caps of all the test tubes H2 in the test tube positions are opened, the transverse sample introduction assembly 4 returns to the initial position rightwards, and the test tube rack conveying assembly 9 starts to operate to convey the test tube rack combination H leftwards to the next device (sample testing device or test tube storage device, etc.).

It can be seen from the above-mentioned cap opening process that the instrument can perform cap opening operation regardless of whether the test tube H2 and the test tube cap H5 are connected by means of threads, such that the instrument can be compatible with more test tube types. The test tube cap H5 without a thread structure is also rotated to open the cap, which can fully ensure the smooth cap opening process and ensure that the sample in the test tube will not spill out. Certainly, if it is not necessary to rotate the cap for opening, the rotation function of the selected rotating electric claw 709 may be turned off, and the test tube cap H5 may be directly pulled out from an upper end of the test tube H2.

Inevitably, due to the influence of various uncertain factors, the instrument may produce some abnormal conditions in the process of opening the cap.

During cap opening, the rotating electric claw 709 slips off when clamping the test tube cap H5, and the test tube cap H5 descends together with the test tube H2 and cannot be separated successfully, as shown in FIG. 15.

In this case, the transmitting sensor 1301 and the receiving sensor 1302 detect that there is an object (test tube cap H5) therebetween, and the transmitting sensor 1303 and the receiving sensor 1304 also detect that there is an object (test tube H2). In this case, the rotating electric claw 709 operates to re-open the clamping finger 710. Then, the second motor 605 starts again, such that the test tube cap opening clamping assembly 6 moves to the position L1 to lift the test tube H2. The rotating electric claw 709 performs the above-described cap opening operation again. Then, the transmitting sensor 1301 and the receiving sensor 1302 work, and the transmitting sensor 1303 and the receiving sensor 1304 also work to detect whether there is an object between the two sensors... until the transmitting sensor 1301 and the receiving sensor 1302 confirm that there is no object between the two sensors, and the transmitting sensor 1303 and the receiving sensor 1304 detect that there is an object (test tube H2), which indicates that the instrument successfully realizes the separation between the test tube and the cap. Then the subsequent workflow proceeds. Certainly, the number of times of repeating cap opening will be set for the instrument in advance. If the test tube cap H5 is still not separated successfully after the number of times of cap opening set for the instrument reaches, the instrument will give an alarm prompt for the operator to check and manually eliminate the fault.

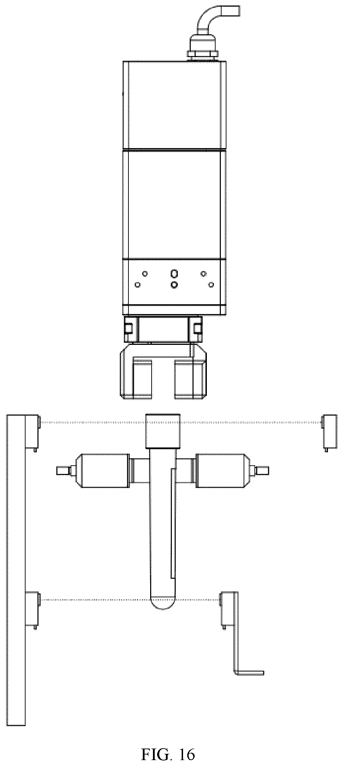

When the cap is opened, the clamping block 613 slides off when clamping the test tube, and the test tube H2 cannot follow the clamping block 613 to move downwards, and cannot be separated from the test tube cap H5 successfully, as shown in FIG. 16.

In this case, the transmitting sensor 1301 and the receiving sensor 1302 detect that there is an object (test tube H2) therebetween, and the transmitting sensor 1303 and the receiving sensor 1304 detect that there is no object. In this case, the second motor 605 starts to operate reversely to make the clamping block 613 in an open state. Then, the second motor 605 starts again to move the test tube cap opening clamping assembly 6 to the position L1, and then the second lead screw motor 611 starts to clamp the test tube H2. Then, the rotating electric claw 709 starts rotating, and the second motor 605 starts reversely again, and the cap opening operation is performed again... until the transmitting sensor 1301 and the receiving sensor 1302 confirm that there is no object therebetween, and the transmitting sensor 1303 and the receiving sensor 1304 detect that there is an object (test tube H2), indicating that the instrument successfully realizes the separation between the test tube and the cap, and then the subsequent workflow is performed. Certainly, the number of times of repeating cap opening will be set for the instrument in advance. If the number of times of cap rotating set for the instrument reaches, and if the number of times of cap opening set for the instrument reaches, the test tube cap H5 is still not separated successfully, the instrument will give an alarm prompt for the operator to check and manually eliminate the fault.

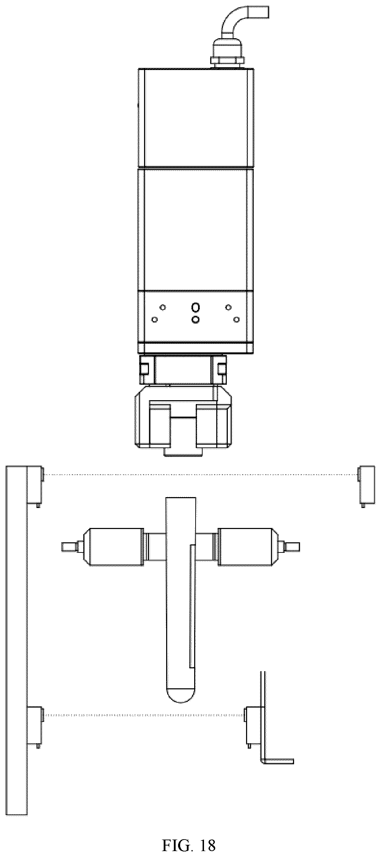

When the cap is opened, there may also be another situation, that is, the test tube H2 and the test tube cap H5 have been successfully separated, but during the cap opening process, the test tube H2 slightly slips relative to the clamping block 613, resulting in that the test tube H2 does not fall back to the required position and is slightly higher than the height when placed on the test tube rack H1, and the transmitting sensor 1303 and the receiving sensor 1304 do not detect the test tube H2, as shown in FIG. 18. In this case, the second motor 605 will continue to operate to drive the test tube H2 to continue descending until the transmitting sensor 1303 and the receiving sensor 1304 detect the test tube H2. This ensures that the test tube H2 can be safely returned to the test tube rack H1.

What is disclosed above are only preferred examples of the sample pretreatment system capable of automatically opening a cap of the present disclosure, and certainly do not limit the scope of the present disclosure. Those of ordinary skill in the art can understand all or part of the processes for implementing the above examples, and equivalent changes made according to the claims of the present disclosure still fall within the scope of the present disclosure.

## Claims

1. A sample pretreatment system capable of automatically opening a cap,
comprising a complete machine base plate, a sample introduction tray, a sample introduction side shifting assembly, a test tube rack identity (ID) recognition assembly, a transverse sample introduction assembly, a test tube ID recognition assembly, a test tube cap opening clamping assembly, a cap opening assembly, a test tube cap collecting assembly, a test tube rack conveying assembly, a floor cabinet assembly, an upper housing and a control assembly, wherein
the complete machine base plate is fixedly arranged at a top of the floor cabinet assembly, the sample introduction tray, the sample introduction side shifting assembly, the test tube rack ID recognition assembly, the transverse sample introduction assembly, the test tube ID recognition assembly, the test tube cap opening clamping assembly, the cap opening assembly, the test tube cap collecting assembly, the test tube rack conveying assembly, the upper housing and the control assembly are all fixedly arranged on the complete machine base plate, the upper housing is positioned at the side close to the sample introduction tray, the sample introduction side shifting assembly is positioned at one side of the sample introduction tray, the test tube rack ID recognition assembly is positioned at one side of the sample introduction tray, the transverse sample introduction assembly is positioned at one side of the test tube rack ID recognition assembly, the test tube ID recognition assembly is positioned at the side, far away from the test tube rack ID recognition assembly, of the transverse sample introduction assembly, the cap opening assembly is positioned at one side of the test tube ID recognition assembly, the test tube cap opening clamping assembly is positioned at the side, far away from the test tube ID recognition assembly, of the cap opening assembly, the test tube cap collecting assembly is positioned at one side of the cap opening assembly, the test tube rack conveying assembly is positioned at one side of the test tube cap opening clamping assembly, and the control assembly is positioned at one side of the sample introduction tray.

2. The sample pretreatment system capable of automatically opening a cap according to claim 1, wherein the sample introduction tray is of a near-sighted flat sheet metal structure.

3. The sample pretreatment system capable of automatically opening a cap according to claim 1, wherein the sample introduction tray stores a plurality of test tube rack combinations, and the test tube rack combination comprises a test tube rack, a plurality of test tubes, a test tube rack ID, test tube IDs and test tube caps.

4. The sample pretreatment system capable of automatically opening a cap according to claim 1, wherein the transverse sample introduction assembly comprises a bottom plate, a first motor, a first driving wheel, a first driven wheel, a first belt, a first guide rail, a first sliding block, a shifting sheet, a belt fixing plate and a test tube rack supporting plate, the first motor is arranged at one side of the bottom plate, the first driving wheel is fixedly connected to an output end of the first motor and is positioned at one side of the first motor, the first driven wheel is rotationally connected to the bottom plate and positioned at the side far away from the first motor, the first belt is arranged between the first driving wheel and the first driven wheel in a sleeving manner, the first guide rail is fixedly connected to the bottom plate and positioned at a top of the bottom plate, the first sliding block is slidably connected to the first guide rail and positioned at one side of the first guide rail, the shifting sheet is fixedly connected to the first sliding block and positioned at a top of the first sliding block, the belt fixing plate is fixedly connected to the first sliding block and arranged at one side of the first belt, and the test tube rack supporting plate is arranged at one side of the first guide rail.

5. The sample pretreatment system capable of automatically opening a cap according to claim 1, wherein the cap opening assembly comprises a cap opening bottom plate, a second guide rail, a second sliding block, an electric claw mounting plate, a second driven wheel, a second motor, a second driving wheel, a second belt, a rotating electric claw, a clamping finger and a finger cushion block, the second guide rail is arranged at one side of the cap opening bottom plate, the second sliding block is slidably connected to the second guide rail and is positioned at one side of the second guide rail, the electric claw mounting plate is fixedly connected to the second sliding block and positioned at one side of the second sliding block, the second driven wheel is arranged at one side of the cap opening bottom plate, the second motor is fixedly connected to the cap opening bottom plate and positioned at one side of the cap opening bottom plate, the second driving wheel is fixedly connected to an output end of the second motor and positioned at one side of the second motor, the second belt is arranged at one side of the second driving wheel and one side of the second driven wheel in a sleeving manner, the rotating electric claw is arranged at one side of the second belt, the clamping finger is arranged at a bottom of the rotating electric claw, and the finger cushion block is fixedly connected to the clamping finger and positioned at one side of the clamping finger.
